(19) Europäisches Patentamt
European Patent Office
Office européen des brevets

(11) **EP 4 567 685 A1**

(12) **EUROPEAN PATENT APPLICATION**

(43) Date of publication:
**11.06.2025 Bulletin 2025/24**

(21) Application number: **23214702.5**

(22) Date of filing: **06.12.2023**

(51) International Patent Classification (IPC):
*G06N 10/40* (2022.01)     *G06N 10/20* (2022.01)

(52) Cooperative Patent Classification (CPC):
**G06N 10/40;** G06N 10/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Forschungszentrum Jülich GmbH 52425 Jülich (DE)**

(72) Inventors:
• **ANSARI, Mohammad 52074 Aachen (DE)**
• **JIANG, Zhongyi 52425 Jülich (DE)**

(74) Representative: **Leinweber & Zimmermann Patentanwalts-PartG mbB European Patent Attorneys Viktualienmarkt 8 80331 München (DE)**

(54) **METHOD OF IMPLEMENTING A FERMIONIC SIMULATION GATE**

(57)     The invention provides for a method of implementing a fermionic simulation gate (fSim) on two qubits by driving coupling therebetween so as to control a first angle (θ) determining an iSWAP-type of operation and a second angle (φ) determining a cPhase-type of operation of the gate, wherein the driving is accomplished by a bichromatic parametric microwave/flux/current signal.

## Fig. 1

$$H_1^d = \Omega_1^d \sin\left(\omega_1^d t + \phi_1^d\right)a_1^\dagger a_1$$

$$H_2^d = \Omega_2^d \sin\left(\omega_2^d t + \phi_2^d\right)a_2^\dagger a_2$$

EP 4 567 685 A1

**Description**

The invention relates to a method of implementing a fermionic simulation gate (fSim) on two qubits by driving coupling therebetween so as to control a first angle ($\theta$) determining an iSWAP-type of operation and a second angle ($\varphi$) determining a cPhase-type of operation of the gate.

The two-qubit gates are the essential elements determining the performance of quantum processors. In most cases, there is only one type of native two-qubit gate available in a quantum processor. Entanglement operations are decomposed into a sequence of single-qubit gates and the native two-qubit gates. This can simplify the gate design and calibration and is efficient enough for many algorithms [A. Barenco, C. H. Bennett, R. Cleve, D. P. DiVincenzo, N. Margolus, P. Shor, T. Sleator, J. A. Smolin, and H. Weinfurter, Elementary gates for quantum computation, Phys. Rev. A 52, 3457 (1995)]. However, it comes at the expense of implementing more gates and larger circuit depth. An alternative approach is to have flexible two-qubit gates. This is especially helpful for NISQ devices because they are more sensitive to the number of gates performed and the circuit depth.

A typical kind of flexible two-qubit gate is the excitation-preserved two-qubit gate, also called the Fermionic Simulation gate (fSim).

$$fSim(\theta, \varphi) = \begin{pmatrix} 1 & 0 & 0 & 0 \\ 0 & \cos(\theta) & -i\sin(\theta) & 0 \\ 0 & -i\sin(\theta) & \cos(\theta) & 0 \\ 0 & 0 & 0 & e^{i\varphi} \end{pmatrix}$$

The fSim gate can be viewed as a combination of iSWAP and CPhase gates. fSim is the most natural gate set for simulating fermionic systems. In fact, the gate was first proposed in F. Verstraete, J. I. Cirac, and J. I. Latorre, Quantum circuits for strongly correlated quantum systems, Phys. Rev. A 79, 032316 (2009) for simulating strongly correlated systems. There, a quantum circuit to simulate the full dynamics of a one-dimensional Quantum Ising model in a transverse field was proposed. It was then further developed for simulating electronic structure Hamiltonians [I. D. Kivlichan, J. McClean, N. Wiebe, C. Gidney, A. Aspuru-Guzik, G. K.-L. Chan, and R. Babbush, Quantum simulation of electronic structure with linear depth and connectivity, Phys. Rev. Lett. 120, 110501 (2018)]. It was shown that using the fSim gates, electronic structure Hamiltonians can be simulated in linear circuit depth. A detailed theoretical study suggests that it is possible to calculate the ground state of Fermi-Hubbard model of a size beyond capacity of classical exact diagonalization using variational quantum algorithm with a gate depth less than a thousand, assuming the continuous fSim gates are available [C. Cade, L. Mineh, A. Montanaro, and S. Stanisic, Strategies for solving the fermi-Hubbard model on near-term quantum computers, Phys. Rev. B 102, 235122 (2020)].

Previous implementation of fSim gates use either two static controls [B. Foxen, C. Neill, A. Dunsworth, P. Roushan, B. Chiaro, A. Megrant, J. Kelly, Z. Chen, K. Satzinger, R. Barends, F. Arute, K. Arya, R. Babbush, D. Bacon, J. C. Bardin, S. Boixo, D. Buell, B. Burkett, Y. Chen, R. Collins, E. Farhi, A. Fowler, C. Gidney, M. Giustina, R. Graff, M. Harrigan, T. Huang, S. V. Isakov, E. Jeffrey, Z. Jiang, D. Kafri, K. Kechedzhi, P. Klimov, A. Korotkov, F. Kostritsa, D. Landhuis, E. Lucero, J. McClean, M. McEwen, X. Mi, M. Mohseni, J. Y. Mutus, O. Naaman, M. Neeley, M. Niu, A. Petukhov, C. Quintana, N. Rubin, D. Sank, V. Smelyanskiy, A. Vainsencher, T. C. White, Z. Yao, P. Yeh, A. Zalcman, H. Neven, and J. M. Martinis (Google AI Quantum), Demonstrating a continuous set of two-qubit gates for near-term quantum algorithms, Phys. Rev. Lett. 125, 120504 (2020)] or one static control and one parametric drive [I. N. Moskalenko, I. A. Simakov, N. N. Abramov, A. A. Grigorev, D. O. Moskalev, A. A. Pishchimova, N. S. Smirnov, E. V. Zikiy, I. A. Rodionov, and I. S. Besedin, High fidelity two-qubit gates on fluxoniums using a tunable coupler, npj Quantum Information 8, 130 (2022)].

It is an object of the present invention to provide an alternative advantageous implementation of a fSim gate.

This object is according to the invention attained in that the driving is accomplished by a bichromatic parametric microwave/flux/current signal.

In particular, a protocol of implementing fSim gate in accordance with the invention uses two parametric drives at different frequencies in a transmon-coupler-transmon system. In the scope of the work leading to the invention, it was numerically demonstrated that all iSWAP angles $\theta$ (first angle) and conditional phase angles $\varphi$ (second angle) can be achieved while maintaining low leakage error.

In an example of the protocol according to the invention, one drive is resonant with |01> ↔ |10> transition, therefore controlling the iSWAP angle. The other drive drives the CPhase transition ($|11\rangle \leftrightarrow |02\rangle$ or $|11\rangle \leftrightarrow |20\rangle$) with some detuning. Once a full cycle of oscillation is completed, $|11\rangle$ state picks up a phase dependent on the detuning. A major challenge of driving two transitions together is to synchronize them such that the target angle and phase are achieved at the end of the gate. Crosstalk between the two drives makes the situation more complicated. To synchronize the two transitions, accurate analytical formulas for the effective coupling strengths were derived. The effective coupling strengths can accurately predict the dynamics of the transitions.

Specifically, the invention provides a proposal of implementing a continuous fSim gate in superconducting systems using bichromatic parametric drives. It is proposed to drive the iSWAP transition and CPhase transition simultaneously. In order to study the crosstalk effect between the two drives, accurate analytical formulas of the effective coupling strength valid for a wide range: from weak coupling to strong coupling and from weak drive to strong drive were derived. With the help of these analytical formulas, the optimal drive amplitude for minimizing leakage can be calculated. The analytical calculation shows that both iSWAP angle θ and conditional phase angle φ can be tuned in full range, which is verified by numerical simulation. The flexibility of continuous fSim gates makes it advantageous to many quantum algorithms such as for simulating fermionic systems. The gate protocol is applicable to current superconducting quantum computation platforms. It can facilitate the practical application of quantum computation in the NISQ era.

In particular, when driving the iSWAP transition, i.e., $|0,1\rangle \leftrightarrow |1,0\rangle$ transition, with the drive detuning chosen to be zero, the iSWAP angle θ can be calculated as:

$$\theta = \arcsin(|\langle 0,1|U|1,0\rangle|)$$
$$= gt \tag{1}$$

where g is the coupling strength, t is the gate time, and U is the time evolution that is determined by the Hamiltonian of the system.

In the case of driving the CPhase gate, one can drive the transition ($|1,1\rangle \leftrightarrow |2,0\rangle$ or $|1,1\rangle \leftrightarrow |0,2\rangle$) with some detuning $\Delta$, with the requirement that the final state goes back to $|1,1\rangle$ at the end of the evolution to minimize leakage. The effect of the total evolution is simply multiplying a phase to $|1,1\rangle$:

$$U(t_g) = -e^{-i\frac{\Delta t_g}{2}} \tag{2}$$

with $t_g = \frac{2\pi}{\sqrt{\Delta^2 + 4g^2}}$

So, the conditional phase φ is given by

$$\varphi = \pi \left( 1 - \frac{\Delta}{\sqrt{\Delta^2 + 4g^2}} \right). \tag{3}$$

Therefore, the iSWAP angle θ and the conditional phase φ can be controlled by tuning the corresponding coupling strengths and drive detuning.

In an expedient embodiment of the present invention, the coupling between the two qubits is via a common harmonic resonator. In particular, the two qubits are transmons. Specifically, the two transmons are flux-tuneable. The first and second drive signals may be applied to the two transmons separately. Alternatively, one of the drive signals may be applied to the resonator if the resonator is also tuneable or both drive signals may be applied to one of the transmons or to the coupler.

The two parametric drives are applied to the two transmons separately. There are five control parameters of the drives: two drive amplitudes $\Omega_1^d$ and $\Omega_2^d$, two drive frequencies $\omega_1^d$ and $\omega_2^d$ and one relative phase $\phi_1^d - \phi_2^d$ of the first and second drive signals.

In an expedient embodiment of the invention, the first and second drive signals are separately applied to the two qubits. When the relative phase is exemplarily fixed to zero, the Hamiltonian of the system, after neglecting the counter-rotating terms and disregarding direct transmon-transmon coupling, is as follows:

$$H_0 = \sum_j \omega_j a_j^\dagger a_j + \frac{\delta_j}{2} a_j^\dagger a_j (a_j^\dagger a_j - 1) + \sum_{j,k} g_{jk} \left( a_j^\dagger a_k + a_k^\dagger a_j \right)$$

$$H_d = \sum_j \Omega_j \sin(\omega_j^d t + \phi_j) a_j^\dagger a_j$$

$$H_{sys} = H_0 + H_d$$

$$(4)$$

where $a_j^\dagger$ and $a_j$ are bosonic creation and annihilation operators. j, k = 1, 2 and r. Typical values used in the numerical simulation, are:

$$\omega_1 = 7.15 * 2\pi\, GHz, \quad \omega_2 = 7.6 * 2\pi\, GHz,$$

$$\omega_r = 8.1 * 2\pi\, GHz$$

$$\delta_1 = \delta_2 = -200 * 2\pi\, MHz, \qquad \delta_r = 0$$

$$g_{1r} = g_{2r} = 120 * 2\pi\, MHz, \qquad g_{1,2} = 0$$

$$\phi_1^d = \phi_2^d = 0$$

$$t_g = 100\, ns$$

$$(5)$$

The total Hamiltonian $H_{sys}$ in (eq.4) consists of the undriven Hamiltonian $H_0$ and the drive Hamiltonian $H_d$. The undriven Hamiltonian $H_0$ is the generalized Jaynes-Cummings Hamiltonian [J. Koch, T. M. Yu, J. Gambetta, A. A. Houck, D. I. Schuster, J. Majer, A. Blais, M. H. Devoret, S. M. Girvin, and R. J. Schoelkopf, Charge-insensitive qubit design derived from the cooper pair box, Phys. Rev. A 76, 042319 (2007)]. The drive Hamiltonian has the standard form of parametric drives (P. Bertet, C. J. P. M. Harmans, and J. E. Mooij, Parametric coupling for superconducting qubits, Phys. Rev. B 73, 064512 (2006); A. Niskanen, K. Harrabi, F. Yoshihara, Y. Nakamura, S. Lloyd, and J. S. Tsai, Quantum coherent tunable coupling of superconducting qubits, Science 316, 723 (2007); A. O. Niskanen, Y. Nakamura, and J.-S. Tsai, Tunable coupling scheme for flux qubits at the optimal point, Phys. Rev. B 73, 094506 (2006); F. Beaudoin, M. P. da Silva, Z. Dutton, and A. Blais, First-order sidebands in circuit qed using qubit frequency modulation, Phys. Rev. A 86, 022305 (2012); J. D. Strand, M. Ware, F. Beaudoin, T. A. Ohki, B. R. Johnson, A. Blais, and B. L. T. Plourde, First-order sideband transitions with flux-driven asymmetric transmon qubits, Phys. Rev. B 87, 220505 (2013); B. Royer, A. L. Grimsmo, N. Didier, and A. Blais, Fast and high-fidelity entangling gate through parametrically modulated longitudinal coupling, Quantum 1, 11 (2017); R. Naik, N. Leung, S. Chakram, P. Groszkowski, Y. Lu, N. Earnest, D. McKay, J. Koch, and D. I. Schuster, Random access quantum information processors using multimode circuit quantum electrodynamics, Nature communications 8, 1904 (2017); D. C. McKay, S. Filipp, A. Mezzacapo, E. Magesan, J. M. Chow, and J. M. Gambetta, Universal gate for fixed-frequency qubits via a tunable bus, Phys. Rev. Appl. 6, 064007 (2016); S. Caldwell, N. Didier, C. Ryan, E. Sete, A. Hudson, P. Karalekas, R. Manenti, M. da Silva, R. Sinclair, E. Acala, et al., Parametrically activated entangling gates using transmon qubits, Physical Review Applied 10, 034050 (2018); M. Ganzhorn, G. Salis, D. J. Egger, A. Fuhrer, M. Mergenthaler, C. Müller, P. Müller, S. Paredes, M. Pechal, M. Werninghaus, and S. Filipp, Benchmarking the noise sensitivity of different parametric two-qubit gates in a single superconducting quantum computing platform, Phys. Rev. Res. 2, 033447 (2020)).

In order to study the dynamics of the system, first a transformation $U_0$ to diagonalize the undriven Hamiltonian $H_0$ is applied:

$$\tilde{H}_0 = U_0^\dagger H_0 U_0$$

$$(6)$$

where $\tilde{H}_0$ is the diagonalized undriven Hamiltonian. The drive Hamiltonian is then brought to the same diagonal frame defined by the transformation $U_0$:

$$\tilde{H}_d = U_0^\dagger H_d U_0$$

(7)

The total Hamiltonian in the diagonal frame is then the sum of $\tilde{H}_0$ and $\tilde{H}_d$:

$$\tilde{H}_{sys} = \tilde{H}_0 + \tilde{H}_d$$

(8)

The diagonal transformation $U_0$ can be found analytically using the Bogoliubov transformation [A. Blais, A. L. Grimsmo, S. M. Girvin, and A. Wallraff, Circuit quantum electrodynamics, Rev. Mod. Phys. 93, 025005 (2021)] [M. F. Gely, G. A. Steele, and D. Bothner, Nature of the lamb shift in weakly anharmonic atoms: From normal-mode splitting to quantum fluctuations, Phys. Rev. A 98, 053808 (2018)] [M. H. Ansari, Superconducting qubits beyond the dispersive regime, Phys. Rev. B 100, 024509 (2019)] or by exact numerical diagonalization.

In the Fock basis $\{|q_1, q_2, r\rangle\}$, where $q_1$ and $q_2$ denote transmon states and $r$ denotes the resonator excitation, the transformed total Hamiltonian reads:

$$\tilde{H}_{sys} = \sum_{m,j,k,l} \left( \tilde{\omega}_{j,k,l} + \Omega_m \sin\left(\omega_m^d t + \phi_m\right) e_{j,k,l}^m \right) |j,k,l\rangle\langle j,k,l|$$
$$+ \sum_{m,j,k,l,n,p,q} \Omega_m \sin(\omega_m^d t + \phi_m) c_{(j,k,l)\to(n,p,q)}^m |n,p,q\rangle\langle j,k,l|$$

(9)

where $\tilde{\omega}_{j,k,l}$, $e_{j,k,l}^m$ and $c_{(j,k,l)\to(n,p,q)}^m$ are defined as:

$$\tilde{\omega}_{j,k,l} = \langle j,k,l|\tilde{H}_0|j,k,l\rangle$$

$$e_{j,k,l}^m = \langle j,k,l|U_0^\dagger a_m^\dagger a_m U_0|j,k,l\rangle$$

$$c_{(j,k,l)\to(n,p,q)}^m = \langle n,p,q|U_0^\dagger a_m^\dagger a_m U_0|j,k,l\rangle$$

(10)

This allows to evaluate the static coupling strength under two drives. For instance, the static coupling between $|010\rangle$ and $|100\rangle$ under one resonance drive $\Omega_1^d \sin\left(\omega_1^d t\right) a_1^\dagger a_1$ and one off-resonant drive $\Omega_2^d \sin\left(\omega_2^d t\right) a_2^\dagger a_2$ is given by:

$$\bar{g}_{100,010} = i * \alpha\Omega_1^d * \left( J_2\left(\beta\frac{\Omega_1^d}{\omega_1^d}\right) + J_0\left(\beta\frac{\Omega_1^d}{\omega_1^d}\right) \right) * J_0\left(\gamma\frac{\Omega_2^d}{\omega_2^d}\right)$$

(11)

where

$$\alpha = \frac{c^1_{(1,0,0)\to(0,1,0)}}{2}, \beta = e^1_{100} - e^1_{010}, \gamma = e^2_{100} - e^2_{010}$$

$$(12)$$

$$\bar{g}_{100,010}, i * \alpha\Omega^d_1 * \left(J_2\left(\beta\frac{\Omega^d_1}{\omega^d_1}\right) + J_0\left(\beta\frac{\Omega^d_1}{\omega^d_1}\right)\right)$$

The first part of $\bar{g}_{100,010}, i * \alpha\Omega^d_1 * \left(J_2\left(\beta\frac{\Omega^d_1}{\omega^d_1}\right) + J_0\left(\beta\frac{\Omega^d_1}{\omega^d_1}\right)\right)$, reflects the static $\bar{g}_{100,010}$ under only one resonant drive. The crosstalk effect of the off- resonant drive comes into play via the last term $J_0\left(\gamma\frac{\Omega^d_2}{\omega^d_2}\right)$. The crosstalk factor has two features. First, it comes through a nonlinear function $J_0$. Second, it only depends on the ratio of $\Omega^d_2$ and $\omega^d_2$: $\Omega^d_2/\omega^d_2$. For small $\Omega^d_2/\omega^d_2$, $J_0$ is a monotonically decreasing function. When $\Omega^d_2/\omega^d_2$ becomes larger, $J_0$ starts to oscillate around zero, giving multiple zeros in $\bar{g}_{100,010}$ and occupation $P_{100}$.

Driving the CPhase gate requires the state always to return to $|11\rangle$ at the end of the gate with a fixed gate time $t_g$. This has to be specially taken care of when the iSWAP drive is also present. When one of the drives is far-detuned, $|\tilde{\Delta}_{110,020} - \omega^d_1| \gg \tilde{\Delta}_{110,020}$, and the other is near-resonant $|\tilde{\Delta}_{110,020} - \omega^d_2| \ll \tilde{\Delta}_{110,020}$. The first order coupling strength between $|110\rangle$ and $|020\rangle$ is:

$$\tilde{G}^{eff}_{110,020} = i * \alpha\Omega^d_2 * J_0\left(\beta\frac{\Omega^d_1}{\omega^d_1}\right) * \left(J_2\left(\gamma\frac{\Omega^d_2}{\omega^d_2}\right) + J_0\left(\gamma\frac{\Omega^d_2}{\omega^d_2}\right)\right) * e^{i(\tilde{\Delta}_{110,020}-\omega^d_2)t}$$

$$(13)$$

where

$$\alpha = \frac{c^{(2)}_{(1,1,0)\to(0,2,0)}}{2}, \beta = e^1_{1,1,0} - e^1_{0,2,0}, \gamma = e^2_{1,1,0} - e^2_{0,2,0}$$

$$(14)$$

Within the $\{|110\rangle, |020\rangle\}$ subspace, Pauli operators can be defined:

$$\sigma^+ = |020\rangle\langle110|$$
$$\sigma^- = |110\rangle\langle020|$$
$$\sigma^z = |110\rangle\langle110| - |110\rangle\langle020|$$
$$\sigma^x = |020\rangle\langle110| + |110\rangle\langle020|$$

$$(15)$$

The effective Hamiltonian then can be written as:

$$H = i * g\sigma^+ e^{i\Delta t} + h.c.$$

$$(16)$$

where

$$\Delta = \widetilde{\Delta}_{110,020} - \omega_2^d$$

$$g = \alpha\Omega_2^d * J_0\left(\beta\frac{\Omega_1^d}{\omega_1^d}\right) * \left(J_2\left(\gamma\frac{\Omega_2^d}{\omega_2^d}\right) + J_0\left(\gamma\frac{\Omega_2^d}{\omega_2^d}\right)\right)$$

$$(17)$$

Another rotating frame transformation $U_r = e^{-i\left(\frac{\Delta}{2}*t+\frac{\pi}{4}\right)\sigma^z}$ to rotate away the time-dependent factor $e^{i\left(\Delta t+\frac{\pi}{2}\right)}$ can now be made. The transformed Hamiltonian is given by:

$$\widetilde{H} = U_r^\dagger H U_r - iU_r^\dagger\frac{\partial U_r}{\partial_t} = \frac{\Delta}{2}\sigma^z + g\sigma^x$$

$$(18)$$

The time evolution can now easily be calculated:

$$U(t) = e^{-i\widetilde{H}t} = cos(\Omega t)I - isin(\Omega t)(n_z\sigma_z + n_x\sigma_x)$$

$$(19)$$

where $\Omega = \sqrt{\left(\frac{\Delta}{2}\right)^2 + g^2}, n_z = \frac{\Delta}{\sqrt{\Delta^2+4g^2}}$ and $n_z = \frac{2g}{\sqrt{\Delta^2+4g^2}}$. Note that the part of conditional phase due to ZZ interaction is now absorbed in the rotating frame transformation $U_r$.

A constant gate time $t_g$ is maintained by requiring:

$$\Omega * t_g = \pi \Rightarrow g = \pm\sqrt{\left(\frac{\pi}{t_g}\right)^2 - \left(\frac{\Delta}{2}\right)^2}$$

$$(20)$$

Now combining equations 17 and 20, allows to numerically solve for the optimal amplitude of the second drive $\Omega_2^d$ for a given set of $\left(t_g, \omega_1^d, \Omega_1^d, \omega_2^d\right)$:

$$\Omega_2^d * J_0\left(\beta\frac{\Omega_1^d}{\omega_1^d}\right) * \left(J_2\left(\gamma\frac{\Omega_2^d}{\omega_2^d}\right) + J_0\left(\gamma\frac{\Omega_2^d}{\omega_2^d}\right)\right) = \pm\sqrt{\left(\frac{\pi}{t_g}\right)^2 - \left(\frac{\widetilde{\Delta}_{110,020} - \omega_2^d}{2}\right)^2}$$

$$(21)$$

Equation 21 is the main equation for determining the optimal amplitude of the second drive. Note that once $\alpha$, $\beta$ and $\gamma$ are fixed in equation 17 by a given undriven Hamiltonian, the sign of g normally will not change within a reasonable range of $\frac{\omega_{1,2}^d}{\Omega_{1,2}^d}$ unless the signs of $\Omega_{1,2}^d$ or $\omega_{1,2}^d$ are flipped. So, there is only a single branch in the numerical solution of g. The optimal amplitude shows up as a low-leakage trajectory around a high-leakage center in the 2D scan of $\omega_2^d$ and

$\Omega_2^d$. Following the trajectory results in the lowest leakage (complete cycle of $|11\rangle \to |02\rangle \to |11\rangle$) and also tunable CPhase.

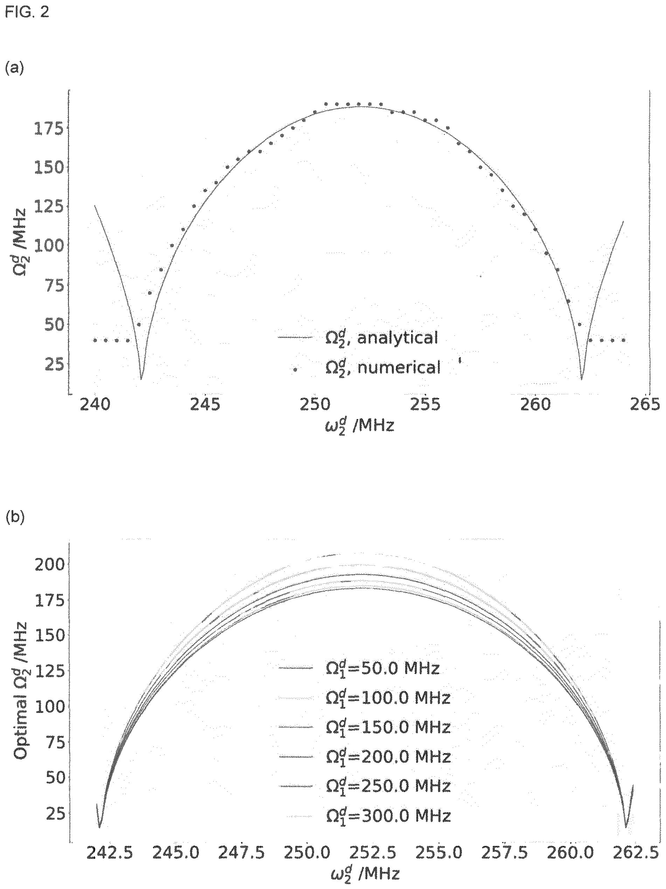

The analytical formula Eq.(21) can accurately predict the optimal drive amplitude $\Omega_2^d$, FIG.2. The curve for optimal $\Omega_2^d$ hast the shape of a semi-ellipse. In fact, up to first order approximation, Eq.(21) becomes

$$\left(\alpha J_0\left(\beta\frac{\Omega_1^d}{\omega_1^d}\right)*\Omega_2^d\right)^2 + \left(\frac{\widetilde{\Delta}_{110,020}-\omega_2^d}{2}\right)^2 = \left(\frac{\pi}{t_g}\right)^2$$

, which defines an elliptic curve. It also shows that for a given $\omega_2^d$, a larger $\Omega_1^d$ requires a larger $\Omega_2^d$, see FIG.7(b). This is because for a given $\omega_2^d$ the target g is fixed, see Eq.(20). However, due to the crosstalk effect of the first drive, one needs to increase $\Omega_2^d$ to compensate for the modulation factor $J_0\left(\beta\frac{\Omega_1^d}{\omega_1^d}\right)$.

The results above allow to write down the equations for the iSWAP angle θ and conditional phase angle φ including the contribution from ZZ interaction and the constraint condition for $\Omega_2^d$ for a given set of $\left(t_g, \Omega_1^d, \omega_2^d\right)$ with $\omega_1^d = \widetilde{\Delta}_{100,010}$.

$$\sin(\theta) = \frac{1-\cos(2g_1 t_g)}{2}$$

$$\varphi = \pi\left(1 - \frac{\widetilde{\Delta}_{110,020}-\omega_2^d}{\sqrt{\left(\widetilde{\Delta}_{110,020}-\omega_2^d\right)^2 + 4g_2^2}}\right) - \xi_{zz}*t_g$$

$$g_2 = \pm\sqrt{\left(\frac{\pi}{t_g}\right)^2 - \left(\frac{\widetilde{\Delta}_{110,020}-\omega_2^d}{2}\right)^2}$$

$$(22)$$

with

$$g_1 = \alpha_1\Omega_1^d*\left(J_2\left(\beta_1\frac{\Omega_1^d}{\omega_1^d}\right) + J_0\left(\beta_1\frac{\Omega_1^d}{\omega_1^d}\right)\right)*J_0\left(\gamma_1\frac{\Omega_2^d}{\omega_2^d}\right)$$

$$g_2 = \alpha_2\Omega_2^d*J_0\left(\beta_2\frac{\Omega_1^d}{\omega_1^d}\right)*\left(J_2\left(\gamma_2\frac{\Omega_2^d}{\omega_2^d}\right) + J_0\left(\gamma_2\frac{\Omega_2^d}{\omega_2^d}\right)\right)$$

$$(23)$$

where $\alpha_{1,2}\beta_{1,2}\gamma_{1,2}$ are constants given by the underlying undriven Hamiltonian, see equations 23 and 27. $\xi_{zz}$ is the ZZ interaction strength given by:

$$\xi_{zz} = E_{110} + E_{000} - E_{100} - E_{010}$$

$$(24)$$

For the numerical simulation of the fSim gate, one first calculates the optimal drive amplitude $\Omega_2^d$ according to Eq.(21). One then uses the analytically calculated $\Omega_2^d$ in the time-dependent Schrödinger equation and numerically solves it. Within the valid area of Eq.(21), the leakage is suppressed below 1%.

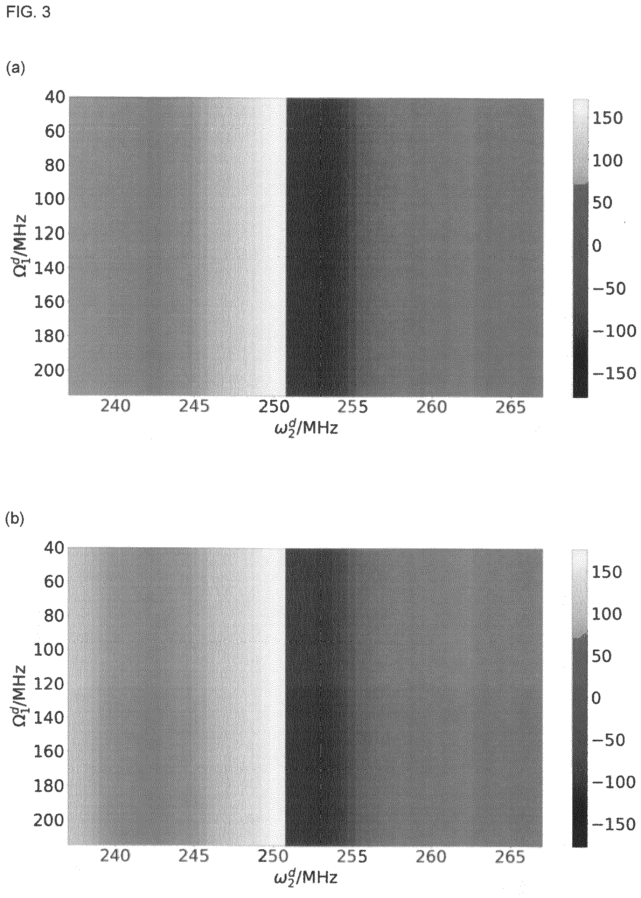

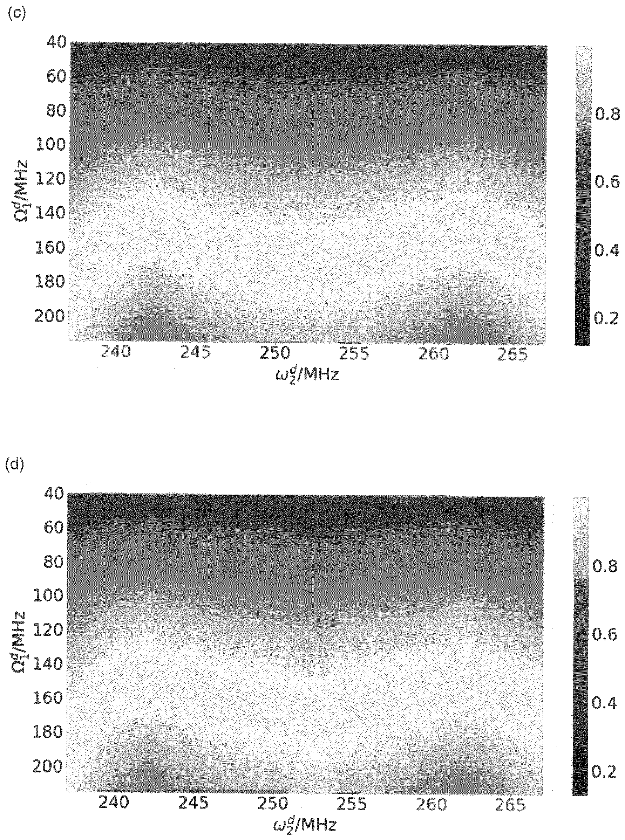

In FIG.3 the iSWAP angle θ and conditional phase angle φ from numerical simulation are plotted and compared to analytical results from Eq.(22). Θ is tunable from 0 to 90° and <p is tunable from - π to π. Both can be faithfully predicted by the analytical formulas. To quantify the effect of leakage, one may calculate the gate fidelity using the formula ([L. H. Pedersen, N. M. Moller, and K. Melmer, Fidelity of quantum operations, Physics Letters A 367, 47 (2007)]):

$$F(U, U_0) = \frac{Tr\left(MM^{\dagger}\right) + |Tr(M)|^2}{d(d+1)}$$

$$(25)$$

where M = PU$_0$UP. U is the unitary operator of the gate process. $U_0$ is the ideal gate operator. *P* is the projection operator onto the computational subspace spanned by $\{|000\rangle, |100\rangle, 1010), |110\rangle\}$ and d is the dimension of *U.*

The fidelity was obtained by numerical simulation. In the fSim gate range, the fidelity is consistently above 99.5%. In most area it's above 99.9%. The cross-talk effect can be clearly seen. The gate fidelity is lower when $\Omega_1^d$ is larger. This is most likely because of the beyond-RWA effect, which is left for future study.

The gate fidelity can be further improved by including pulse-shaping. Here one may choose to use flat-top Gaussian to demonstrate the effect of pulse-shaping. One important step in the numerical simulation is to find the optimal drive amplitude $\Omega_2^d$, see Eq.22 and Eq.23. This was calculated by using RWA when the drives are rectangular pulses. In the case of pulse-shaping, however, the RWA result is not accurate because of the slow-changing rise-and-fall edges, especially when one wants to achieve high gate fidelity. In order to overcome this problem, one may choose to make a two-level approximation and numerically optimize the drive amplitude in the effective two-level system, which is spanned by | 011⟩ and |020⟩ in the present case. One can also include more relevant levels accordingly. During the numerical optimization, only the pulse amplitude is varied. Other parameters such as pulse width and rise-and-fall time are fixed, which can also affect the gate fidelity. The pulse to be optimized is therefore expressed as:

$$\text{optimization factor} * \text{basic flat-top Gaussian}$$

$$(26)$$

One finds the optimal drive amplitude by requiring minimal leakage to |020⟩, or equivalently maximal |110⟩ occupation. The gate fidelity, iSWAP probability P10 and the conditional phase with pulse-shaping are obtained by numerical calculation. One can see that the gate fidelity is improved by approximately one-order-of-magnitude. The P10 and CPhase patterns are roughly unchanged.

Nevertheless, one finds more discontinuities/jumps in the plots. This is because of the numerical optimization. During the optimization, especially when the drive frequency $\omega_2^d$ is approaching the boundaries of the valid area of fSim gates, the resulting optimization factors may be not continuous in contrast to the analytical formulas Eq.22 and Eq.23 used when there is no pulse-shaping. The discontinuities in the optimization factor can be clearly seen.

It should be noticed that the CPhase gate can also be driven by multi-photon processes. Any transition defined by

$$\Delta_{110,\eta} - x\omega_0^d - y\omega_1^d - z\omega_2^d = 0$$

can be used to implement the conditional phase, where η denotes an ancillary level.

In the following, the invention is further exemplarily explained with reference to the drawings, wherein:

FIG. 1     shows a schematic of an embodiment according to the invention;

FIG. 2    shows curves of optimal drive amplitude versus drive frequency;

FIG. 3    shows a dependency of iSWAP angle and CPhase angle on drive conditions, and

FIG. 4    shows the real-time evolution of the continuous fSim gate when the iSWAP angle is tuned to $\theta = 90°$ and the conditional phase angle is tuned to $\varphi = 0°$.

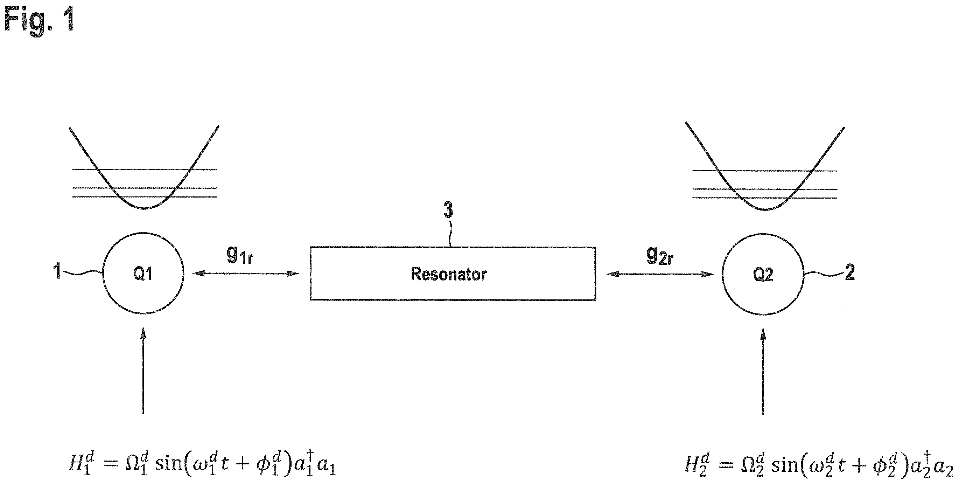

In the embodiment schematically illustrated in Fig. 1, a first qubit 1 and a second qubit 2 are coupled via a common harmonic resonator drive. Specifically, the first and second qubits 1, 2 are transmons. The transmons may be flux-tuneable and the resonator drive may also be tuneable.

Further indicated, above the qubits 1 and 2 in Fig. 1, are the three lowermost states $|0\rangle$, $|1\rangle$, and $|2\rangle$ of the qubits. Below the qubits 1, 2, there are also indicated the drive Hamiltonians of first and second microwave/flux/current drive signals applied to the first and second qubits, respectively, in accordance with equation (4) indicated above.

Fig. 2 shows the optimal amplitude $\Omega_2^d$ vs. $\omega_2^d$ according to previous equation (21). Fig. 2(a) is the numerically determined optimal drive amplitude $\Omega_2^d$ by minimizing leakage and analytical optimal $\Omega_2^d$. The discrepancy on the edges is because $|\omega_2^d - \Delta_{11,02}| > \dfrac{2\pi}{t_g}$. No valid solution of effective coupling $g_{11,02}$ can be found to satisfy the condition that one and only one cycle of $|11\rangle \to |02\rangle \to |11\rangle$ is completed in the given gate time $t_g$. Therefore, only the $\omega_2^d$ and $\Omega_2^d$ in the middle area are relevant. Fig. 2(b) shows analytically calculated optimal $\Omega_2^d$ vs. $\omega_2^d$ with various $\Omega_1^d$.

Fig. 3 shows the continuous fSim gate. Both $\theta$ and $\varphi$ are continuously tunable. Fig. 3(a) shows the analytically calculated conditional phase vs. $\Omega_1^d$ and $\omega_2^d$. The phase covers the full $2\pi$ range from $-\pi$ to $\pi$. The phase is dominantly determined by $\omega_2^d$. The vertical cut in the middle is because the range is chosen to be $[-\pi, \pi)$ in order to manifest the zero conditional phase trajectory. Along the vertical line $\varphi = \pi(-\pi)$. Fig. 3(b) shows the numerically calculated conditional phase vs. $\Omega_1^d$ and $\omega_2^d$. It agrees with the analytical plot well. Fig. 3(c) shows the analytically calculated P10 vs. $\Omega_1^d$ and $\omega_2^d$. P10 is tunable from 0 to 1 (correspondingly $\theta_{iswap}$ from 0 to 90°). P10 is mainly controlled by $\Omega_1^d$ with some modulation from $\omega_2^d$. A larger $\Omega_1^d$ is needed to achieve maximum P10 when $\omega_2^d$ is resonant with $\Delta_{11,02}$. This is because when $\omega_2^d$ gets closer to $\Delta_{11,02}$, the corresponding optimal $\Omega_2^d$ becomes larger, which in turn makes $\dfrac{\Omega_2^d}{\omega_2^d}$ larger. The effective coupling $g_{01,10}$ is thus reduced. Fig. 3(d) shows the numerically calculated P10 vs. Std and $\omega_2^d$, consistent with analytical plot.

As a specific example of the continuous fSim gate, it is hereafter shown how to implement a 90° iSWAP gate with zero ZZ phase. One first solves for $\left(\omega_2^d, \Omega_1^d, \Omega_2^d\right)$ needed to achieve $\theta = 90°$, $\varphi = 0°$. In fact, once $\theta$, $\varphi$ are given, one can analytically solve for $g_1$, $g_2$ and $\omega_2^d$ using Eq.(22):

$$g_1 = \frac{arc\cos(1 - 2\sin\theta)}{2t_g}$$

$$\omega_2^d = \Delta_{110,020} - 2\left(\frac{\pi - \varphi}{t_g} - \xi_{zz}\right)$$

$$g_2\pm = \sqrt{\left(\frac{\pi}{t_g}\right)^2 - \left(\frac{\pi - \varphi}{t_g} - \xi_{zz}\right)^2}$$

(27)

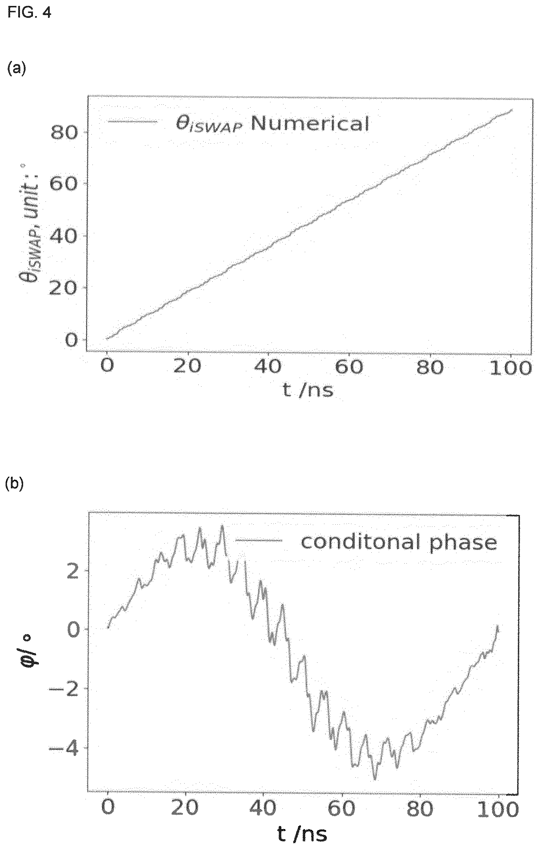

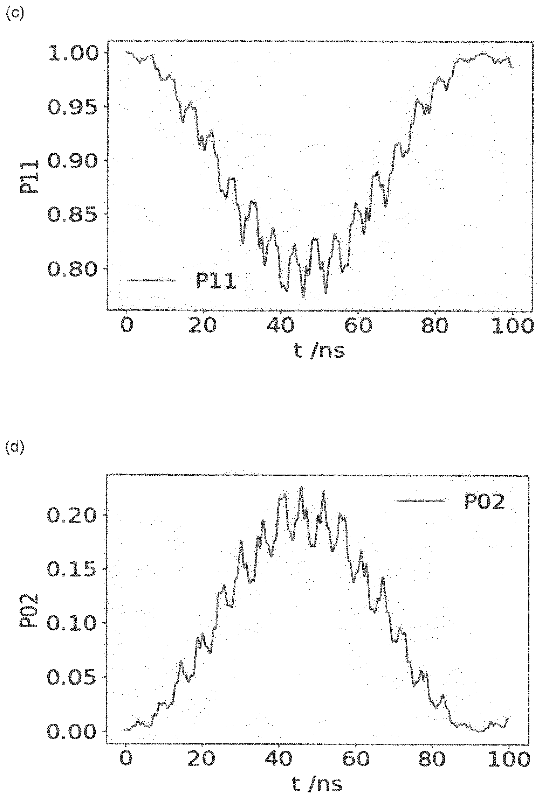

Therefore, one only needs to numerically solve Eq.(23) for $\left(\Omega_1^d, \Omega_2^d\right)$. FIG. 4 shows the real-time evolution of the system. The target angles $\theta = 90°$, $\varphi = 0°$ are achieved at the end of the gate. It should be noticed that there is a bit of over-rotation in P11 and P02. This is because of the beyond-RWA effect. It can be corrected by including fast oscillating terms.

When the qubit is in idle mode, one can use the same method to eliminate ZZ phase. Assuming a far-off-resonant drive $\Omega^d \sin(\omega^d t)$. The period is given by $t_g = \frac{2\pi}{\sqrt{\Delta^2 + 4g^2}}$, where $\Delta = \Delta_{110,020} - \omega^d$. The accumulated phase is

$$\varphi = \pi\left(1 - \frac{\Delta}{\sqrt{\Delta^2 + 4g^2}}\right) - \xi_{zz}t_g$$

. Requiring $\varphi = 0$ we arrive at:

$$g^2 - \xi_{zz}\Delta = \frac{\xi_{zz}^2}{4}$$

(28)

$$g = \alpha\Omega^d * \left(J_2\left(\beta\frac{\Omega^d}{\omega^d}\right) + J_0\left(\beta\frac{\Omega^d}{\omega^d}\right)\right)$$

Eq.(28) can be numerically solved combining .

Specifically Fig. 4 shows a pure iSWAP gate (conditional phase $\varphi = 0$) and full iSWAP $\theta = 90°$. Fidelity = 99.67%. Fig. 4(a) shows the real-time evolution of iSWAP angle $\theta$. Fig. 4(b) shows the dynamics of conditional phase. It is governed by both the ZZ interaction and geometric phase. The overall phase is zero at the end of the gate. Fig. 4(c) shows the evolution of P11. It corresponds to a closed trajectory in the Bloch sphere. There is a bit of over-rotation which causes leakage. This is due to the use of the rotating wave approximation in the analytical formula. This over-rotation can be corrected by including higher-order oscillating terms. Fig. 4(d) shows the evolution of P02. There is some residual population at the end of the evolution.

## Claims

1. Method of implementing a fermionic simulation gate (fSim) on two qubits by driving coupling therebetween so as to control a first angle ($\theta$) determining an iSWAP-type of operation and a second angle ($\varphi$) determining a cPhase-type of operation of the gate, wherein the driving is accomplished by a bichromatic parametric microwave/flux/current signal.

2. Method according to claim 1, wherein the bichromatic parametric microwave/flux/current signal comprises a first microwave/flux/current drive signal having a first amplitude $\Omega_1^d$, first frequency $\omega_1^d$, and first phase $\phi_1^d$, and a second microwave/flux/current drive signal having a second amplitude $\Omega_2^d$, second frequency $\omega_2^d$, and second phase $\phi_2^d$, said first and second amplitudes $\Omega_1^d, \Omega_2^d$, frequencies $\omega_1^d, \omega_2^d$, and phases $\phi_1^d, \phi_2^d$ being the control parameters for driving.

3. Method according to claim 2, wherein the phase difference between said first and second phases is zero.

4. Method according to claim 2, wherein the first microwave/flux/current drive signal is in resonance with an iSWAP transition and the second microwave/flux/current signal is detuned from cPhase transition of the two qubits.

5. Method according to anyone of claims 1 to 4, wherein the iSWAP transition is between $|01\rangle$ and $|10\rangle$ two-qubit states and the cPhase transition is between $|11\rangle$ and $|02\rangle$ or $|11\rangle$ and $|20\rangle$ two-qubit states.

6. Method according to anyone of claims 2 to 5, wherein for a given set of gate time ($t_g$), amplitude ($\Omega_1^d$) of the first drive signal and frequency ($\omega_2^d$) of the second drive signal the amplitude ($\Omega_2^d$) of the second drive signal is tuned for minimal leakage to $|020\rangle$, or equivalently for maximal $|110\rangle$ occupation.

7. Method according to claim 6, wherein tuning of the amplitude ($\Omega_2^d$) of the second drive signal is according to the equation

$$\alpha\Omega_2^d * J_0\left(\beta\frac{\Omega_1^d}{\omega_1^d}\right) * \left(J_2\left(\gamma\frac{\Omega_2^d}{\omega_2^d}\right) + J_0\left(\gamma\frac{\Omega_2^d}{\omega_2^d}\right)\right) = \pm\sqrt{\left(\frac{\pi}{t_g}\right)^2 - \left(\frac{\widetilde{\Delta}_{110,020} - \omega_2^d}{2}\right)^2}$$

where $J_n$ is the n-th Bessel function of the first kind and

$$\alpha = \frac{c_{(1,1,0)\to(0,2,0)}^{(2)}}{2}$$

$$\beta = e_{1,1,0}^1 - e_{0,2,0}^1$$

$$\gamma = e_{1,1,0}^2 - e_{0,2,0}^2$$

in accordance with a system Hamiltonian

$$\widetilde{H}_{sys} = \sum \widetilde{H}_0 + \widetilde{H}_d$$

in a frame in which the given undriven Hamiltonian $H_0$ of the system is diagonalized by the unitary transformation $U_0$ and

$$\widetilde{\omega}_{j,k,l} = \langle j,k,l|\widetilde{H}_0|j,k,l\rangle$$

$$e_{j,k,l}^m = \langle j,k,l|U_0^\dagger a_m^\dagger a_m U_0|j,k,l\rangle$$

$$c^{m}_{(j,k,l)\rightarrow(n,p,q)} = \langle n,p,q \, |U_0^{\dagger} a_m^{\dagger} a_m U_0|j,k,l\rangle.$$

8. Method according to anyone of claims 1 to 7, wherein the coupling between the two qubits is via a common harmonic resonator.

9. Method according to claim 8 and anyone of claims 2 to 5, wherein the first and second microwave/flux/current drive signals are applied to one or two of the members selected from the group consisting of two qubits and the harmonic resonator.

10. Method according to anyone of claims 1 to 9, wherein the two qubits are transmons.

$$c^{m}_{(j,k,l)\rightarrow(n,p,q)} = \langle n,p,q \, |U_0^{\dagger} a_m^{\dagger} a_m U_0|j,k,l\rangle.$$

EP 4 567 685 A1

# Fig. 1

$$H_1^d = \Omega_1^d \sin\left(\omega_1^d t + \phi_1^d\right) a_1^\dagger a_1 \qquad\qquad H_2^d = \Omega_2^d \sin\left(\omega_2^d t + \phi_2^d\right) a_2^\dagger a_2$$

FIG. 2

(a)

(b)

FIG. 3

(a)

(b)

(c)

(d)

FIG. 4

(a)

(b)

(c)

(d)

Europäisches
Patentamt
European
Patent Office
Office européen
des brevets

**EUROPEAN SEARCH REPORT**

**Application Number**

EP 23 21 4702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EYOB A SETE ET AL: "Parametric-resonance entangling gates with a tunable coupler", ARXIV.ORG, CORNELL UNIVERSITY LIBRARY, 201 OLIN LIBRARY CORNELL UNIVERSITY ITHACA, NY 14853, 7 September 2021 (2021-09-07), XP091047210, DOI: 10.1103/PHYSREVAPPLIED.16.024050 * page 1 - page 5, right-hand column, paragraph 3 * * Appendices A-G * | 1-10 | INV. G06N10/40 ADD. G06N10/20 |
| A | JOSEPH A VALERY ET AL: "Dynamical sweet spot engineering via two-tone flux modulation of superconducting qubits", ARXIV.ORG, CORNELL UNIVERSITY LIBRARY, 201 OLIN LIBRARY CORNELL UNIVERSITY ITHACA, NY 14853, 16 April 2021 (2021-04-16), XP081939247, * page 1 - page 7, left-hand column, paragraph 2 * * Appendices A-C * | 1-10 | |
| A,D | FOXEN B ET AL: "Demonstrating a Continuous Set of Two-qubit Gates for Near-term Quantum Algorithms", ARXIV.ORG, CORNELL UNIVERSITY LIBRARY, 201 OLIN LIBRARY CORNELL UNIVERSITY ITHACA, NY 14853, 23 January 2020 (2020-01-23), XP081591805, * page 1 - page 5, right-hand column, paragraph 1 * * page 7 - page 20 * | 1-10 | **TECHNICAL FIELDS SEARCHED (IPC)** G06N |

-/--

The present search report has been drawn up for all claims

| Place of search | Date of completion of the search | Examiner |
|---|---|---|
| The Hague | 22 May 2024 | Volkmer, Markus |

EPO FORM 1503 03.82 (P04C01)

page 1 of 2

Europäisches
Patentamt

European
Patent Office

Office européen
des brevets

# EUROPEAN SEARCH REPORT

Application Number

EP 23 21 4702

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YU CHEN ET AL: "Qubit Architecture with High Coherence and Fast Tunable Coupling", PHYSICAL REVIEW LETTERS, vol. 113, no. 22, 26 November 2014 (2014-11-26), XP055403674, US ISSN: 0031-9007, DOI: 10.1103/PhysRevLett.113.220502 * pages 220502-1 - pages 220502-5, left-hand column, paragraph 1 * ----- | 1-10 | |
| | | | TECHNICAL FIELDS SEARCHED (IPC) |

The present search report has been drawn up for all claims

| Place of search | Date of completion of the search | Examiner |
|---|---|---|
| The Hague | 22 May 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. BARENCO ; C. H. BENNETT ; R. CLEVE ; D. P. DIVINCENZO ; N. MARGOLUS ; P. SHOR ; T. SLEATOR ; J. A. SMOLIN ; H. WEINFURTER**. Elementary gates for quantum computation. *Phys. Rev. A*, 1995, vol. 52, 3457
- **F. VERSTRAETE ; J. I. CIRAC ; J. I. LATORRE**. Quantum circuits for strongly correlated quantum systems. *Phys. Rev. A*, 2009, vol. 79, 032316
- **I. D. KIVLICHAN ; J. MCCLEAN ; N. WIEBE ; C. GIDNEY ; A. ASPURU-GUZIK ; G. K.-L. CHAN ; R. BABBUSH**. Quantum simulation of electronic structure with linear depth and connectivity. *Phys. Rev. Lett.*, 2018, vol. 120, 110501
- **C. CADE ; L. MINEH ; A. MONTANARO ; S. STANISIC**. Strategies for solving the fermi-Hubbard model on near-term quantum computers. *Phys. Rev. B*, 2020, vol. 102, 235122
- **B. FOXEN ; C. NEILL ; A. DUNSWORTH ; P. ROUSHAN ; B. CHIARO ; A. MEGRANT ; J. KELLY ; Z. CHEN ; K. SATZINGER ; R. BARENDS**. Demonstrating a continuous set of two-qubit gates for near-term quantum algorithms. *Phys. Rev. Lett.*, 2020, vol. 125, 120504
- **I. N. MOSKALENKO ; I. A. SIMAKOV ; N. N. ABRAMOV ; A. A. GRIGOREV ; D. O. MOSKALEV ; A. A. PISHCHIMOVA ; N. S. SMIRNOV ; E. V. ZIKIY ; I. A. RODIONOV ; I. S. BESEDIN**. High fidelity two-qubit gates on fluxoniums using a tunable coupler. *npj Quantum Information*, 2022, vol. 8, 130
- **J. KOCH ; T. M. YU ; J. GAMBETTA ; A. A. HOUCK ; D. I. SCHUSTER ; J. MAJER ; A. BLAIS ; M. H. DEVORET ; S. M. GIRVIN ; R. J. SCHOELKOPF**. Charge-insensitive qubit design derived from the cooper pair box. *Phys. Rev. A*, 2007, vol. 76, 042319
- **P. BERTET ; C. J. P. M. HARMANS ; J. E. MOOIJ**. Parametric coupling for superconducting qubits. *Phys. Rev. B*, 2006, vol. 73, 064512
- **A. NISKANEN ; K. HARRABI ; F. YOSHIHARA ; Y. NAKAMURA ; S. LLOYD ; J. S. TSAI**. Quantum coherent tunable coupling of superconducting qubits. *Science*, 2007, vol. 316, 723
- **A. O. NISKANEN ; Y. NAKAMURA ; J.-S. TSAI**. Tunable coupling scheme for flux qubits at the optimal point. *Phys. Rev. B*, 2006, vol. 73, 094506
- **F. BEAUDOIN ; M. P. DA SILVA ; Z. DUTTON ; A. BLAIS**. First-order sidebands in circuit qed using qubit frequency modulation. *Phys. Rev. A*, 2012, vol. 86, 022305
- **J. D. STRAND ; M. WARE ; F. BEAUDOIN ; T. A. OHKI ; B. R. JOHNSON ; A. BLAIS ; B. L. T. PLOURDE**. First-order sideband transitions with flux-driven asymmetric transmon qubits. *Phys. Rev. B*, 2013, vol. 87, 220505
- **B. ROYER ; A. L. GRIMSMO ; N. DIDIER ; A. BLAIS**. Fast and high-fidelity entangling gate through parametrically modulated longitudinal coupling. *Quantum*, 2017, vol. 1, 11
- **R. NAIK ; N. LEUNG ; S. CHAKRAM ; P. GROSZ-KOWSKI ; Y. LU ; N. EARNEST ; D. MCKAY ; J. KOCH ; D. I. SCHUSTER**. Random access quantum information processors using multimode circuit quantum electrodynamics. *Nature communications*, 2017, vol. 8, 1904
- **D. C. MCKAY ; S. FILIPP ; A. MEZZACAPO ; E. MAGESAN ; J. M. CHOW ; J. M. GAMBETTA**. Universal gate for fixed-frequency qubits via a tunable bus. *Phys. Rev. Appl.*, 2016, vol. 6, 064007
- **S. CALDWELL ; N. DIDIER ; C. RYAN ; E. SETE ; A. HUDSON ; P. KARALEKAS ; R. MANENTI ; M. DA SILVA ; R. SINCLAIR ; E. ACALA et al.** Parametrically activated entangling gates using transmon qubits. *Physical Review Applied*, 2018, vol. 10, 034050
- **M. GANZHORN ; G. SALIS ; D. J. EGGER ; A. FUHRER ; M. MERGENTHALER ; C. MÜLLER ; P. MÜLLER ; S. PAREDES ; M. PECHAL ; M. WERNINGHAUS**. Benchmarking the noise sensitivity of different parametric two-qubit gates in a single superconducting quantum computing platform. *Phys. Rev. Res.*, 2020, vol. 2, 033447
- **A. BLAIS ; A. L. GRIMSMO ; S. M. GIRVIN ; A. WALLRAFF**. Circuit quantum electrodynamics. *Rev. Mod. Phys.*, 2021, vol. 93, 025005
- **M. F. GELY ; G. A. STEELE ; D. BOTHNER**. Nature of the lamb shift in weakly anharmonic atoms: From normal-mode splitting to quantum fluctuations. *Phys. Rev. A*, 2018, vol. 98, 053808
- **M. H. ANSARI**. Superconducting qubits beyond the dispersive regime. *Phys. Rev. B*, 2019, vol. 100, 024509
- **L. H. PEDERSEN ; N. M. MOLLER ; K. MELMER**. Fidelity of quantum operations. *Physics Letters A*, 2007, vol. 367, 47